# EUROPEAN PATENT SPECIFICATION

(11) **EP 2 701 413 B1**
(45) Date of publication and mention of the grant of the patent: **19.09.2018**
(21) Application number: 13004140.3
(22) Date of filing: 21.08.2013
(51) Int. Cl.: H04W 8/24, H04W 8/26

(54) **SIM card to activate and configure a wireless device, system and method thereof**
SIM-Karte zur Aktivierung und Konfiguration eines drahtlosen Gerätes, System und Verfahren dafür
Carte SIM pour activation et configuration automatique de dispositif sans fil, système et procédé associés

(30) Priority: 21.08.2012 US 201213591081
(43) Date of publication of application: 26.02.2014
(73) Proprietor: Synchronoss Technologies, Inc., Bridgewater, NJ 08807 (US)
(72) Inventor: Berry, David E., Basking Ridge, New Jersey 07920 (US)
(74) Representative: Branderhorst, Matthijs Pieter Arie

(56) References cited:
- WO-A1-2010/032270
- US-A1- 2004 166 839
- US-A1- 2005 059 430
- US-A1- 2007 076 760
- US-A1- 2009 061 840

## Description

### FIELD OF THE INVENTION

The present invention relates to wireless telephone networks. More particularly, the present invention relates to a removable module to self-activate and self-configure a wireless device on such networks and a system and a method thereof.

### BACKGROUND OF THE INVENTION

Prior art SIM cards simply identify and authenticate subscribers on wireless devices. Typically, when a consumer signs up for wireless service at a store, a new wireless device and a prior art SIM card are simultaneously sold to the consumer. A representative of a telecommunications provider typically activates and configures the wireless device before, during and/or after the telecommunications provider puts the prior art SIM card into the wireless device such that the wireless device is able to properly operate on a telecommunications network.

A trend in the mobile arena is that consumers are now starting to buy wireless devices separately from SIM cards. Virgin Mobile, Cricket and Metro PCS, to name a few, are telecommunications providers that sell consumers only SIM cards. When a consumer puts a separately purchased SIM card in a wireless device, a telecommunications provider still needs to manually configure the wireless device such that the wireless device at least works properly on the network. In some instances, the telecommunications provider is able to instead drive the consumer through long configuration steps to manually configure the wireless device. Telecommunications providers, however, are currently unable to provide automated activation and configuration to consumers who only buy SIM cards and not wireless devices.

US 2009/061840 discloses methods, systems, and a computer-readable medium for providing telecommunications carrier configuration at activation of a mobile device.

US 2005/059430 discloses a subscriber identity module which includes at least one processor and logic that, when applied to the processor(s), results in a terminal device providing a device identifier to the subscriber identity module.

US 2007/076760 discloses a mobile telecommunication network which is used for detection of device information, such as subscriber information and equipment information.

WO 2010/032270 discloses a method for changing configuration of a mobile device connected to a mobile communication network.

The present invention addresses at least these limitations in the prior art.

### SUMMARY OF THE INVENTION

The invention provides a removable module, a method of setting up a wireless device, and a system as set out in the accompanying claims.

The embodiments and/or examples of the following description which are not covered by the scope of the appended claims are considered as not being part of the present invention.

### BRIEF DESCRIPTION OF THE DRAWINGS

Reference will now be made in detail to implementations of the present invention as illustrated in the accompanying drawings. The same reference indicators will be used throughout the drawings and the following detailed description to refer to the same or like parts.
Figure 1 illustrates an exemplary system in accordance with the present invention.
Figure 2 illustrates a block diagram of an exemplary wireless device configured to self-activate and self-configure in accordance with the present invention.
Figure 3 illustrates an exemplary method of setting up a wireless device on a network in accordance with the present invention.
Figure 4 illustrates an exemplary method of configuring a wireless device in accordance with the present invention.
Figure 5 illustrates another exemplary method of configuring a wireless device in accordance with the present invention.
Figure 6 illustrates an exemplary method of configuring a secondary device in accordance with the present invention.

### DETAILED DESCRIPTION OF THE INVENTION

In the following description, numerous details are set forth for purposes of explanation. However, one of ordinary skill in the art will realize that the invention may be practised without the use of these specific details. Thus, the present invention is not intended to be limited to the embodiments shown.

Embodiments of the present invention allows a telecommunications provider to embed activation and configuration logic into SIM cards that consumers install in their wireless devices.
The activation and configuration logic on a SIM card ensures that a wireless device is activated and properly configured to operate on a network. In some embodiments, the configuration logic on the SIM card also ensures that the wireless device is properly configured with backed up personal data and provisioned with services that a consumer had previously or is subscribed to. Typically, the wireless device is able to self-activate and self-configure when the SIM card is installed the wireless device.

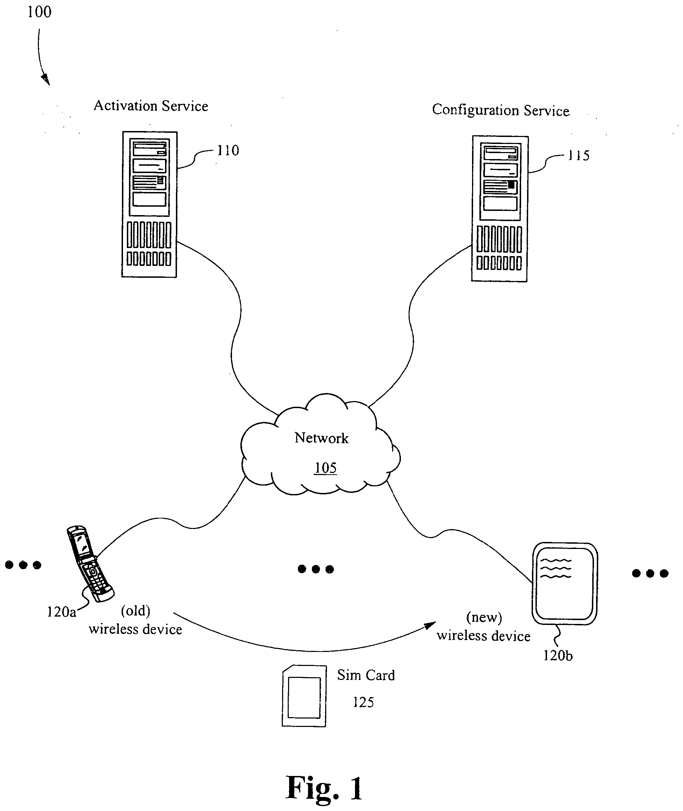

Figure 1 illustrates an exemplary system 100 in accordance with the present invention. The system 100 includes a network 105, an activation service 110 and a configuration service 115. Typically, the network 105, the activation service 110 and the configuration service 115 are controlled or, at least accessed, by an telecommunications provider. The system 100 also includes one or more wireless devices 120a, 120b (collectively 120), and at least one SIM card 125 which provides a wireless device with access to the network 105. The activation service 110 is typically for activating wireless devices 120 for use on the network 105. The configuration service 115 is typically for configuring the wireless device 120 with services required by the network 105. The configuration service 115 can also be for personalizing the wireless devices 120. Each wireless device includes a locus. The locus is for receiving a SIM card of the present invention.

A SIM card of the present invention typically includes an integrated circuit configured to store identification number about a consumer or subscriber. In the foregoing, the terms consumer and subscriber are interchangeable. In some embodiments, the integrated circuit is also configured to store data for automatic navigation to a first predetermined location to access the activation service and to a second predetermined location to access the configuration service. The data can include network addresses of the first predetermined location and the second predetermined location. The first predetermined location can be the same as or different from the second predetermined location. In some embodiments, the integrated circuit is further configured to automatically activate a wireless device on a network and remotely retrieve information to configure the wireless device according to activation and configuration logic on the SIM card. The information includes software required by the telecommunications provider, data to personalize the wireless device, or both.

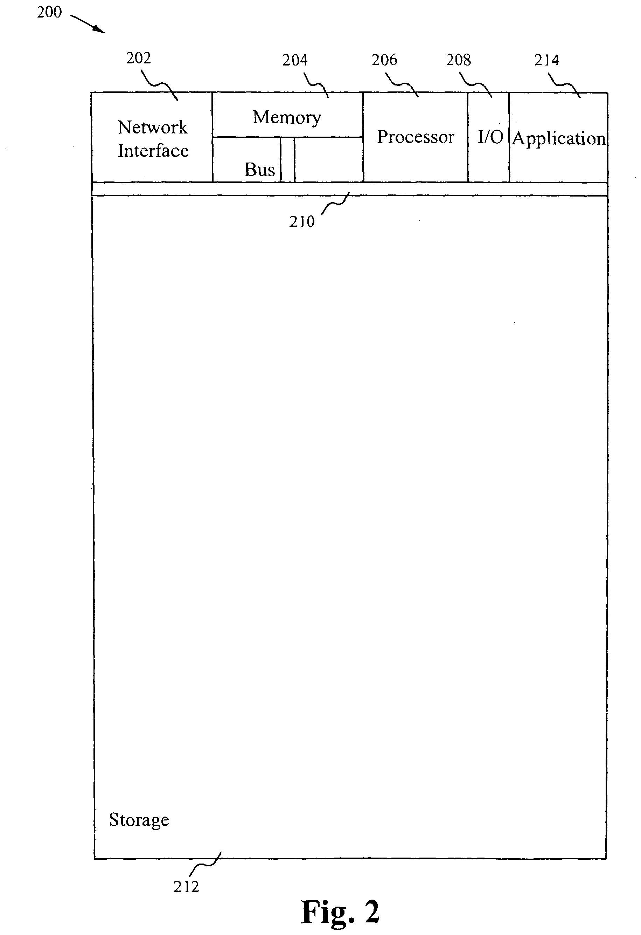

Figure 2 illustrates a block diagram of an exemplary wireless device 200 configured to self-activate and self-configure in accordance with the present invention. The wireless device 200 is able to be used to acquire, store, compute, process, communicate and/or display information. For example, a wireless device 200 is self-activated and self-configured when a SIM card is received in a locus of the wireless device 200.

In general, a hardware structure suitable for implementing the wireless device 200 includes a network interface 202, a memory 204, a processor 206, I/O device(s) 208, a bus 210 and a storage device 212. The choice of processor is not critical as long as a suitable processor with sufficient speed is chosen. The memory 204 is able to be any conventional computer memory known in the art. The storage device 212 is able to include a hard drive, CDROM, CDRW, DVD, DVDRW, Blu-Ray®, flash memory card or any other storage device. The wireless device 200 is able to include one or more network interfaces 202 to connect to a cellular network, an Ethernet and/or other type of LAN. The I/O device(s) 208 are able to include one or more of the following: keyboard, mouse, monitor, display, printer, modem, touchscreen, button interface and other devices. In some embodiments, the hardware structure includes multiple processors and other hardware to perform parallel processing. Application(s) 214 acquired by a subscriber are likely to be stored in the storage device 212 and memory 204 and processed as applications are typically processed. More or fewer components shown in Figure 2 are able to be included in the computing device 200.

Examples of suitable wireless devices include a cellular/mobile telephone (e.g. an iPhone®), a smart appliance, a tablet computer (e.g. an iPad®) or any other suitable computing device capable of receiving a SIM card for subscribing to telecommunications services.

Referring back to Figure 1, when the SIM card 125 is communicatively coupled with a first wireless device such as a mobile telephone 120a of Figure 1, the SIM card enables the first wireless device 120a to navigate to a first network location hosting the activation service 110, enables the wireless device to navigate to a second network location hosting the configuration service 115, and retrieves configuration information from the configuration service 115. In some embodiments, the configuration information includes personalization information. When the SIM card 125 is communicatively decoupled from the first wireless device 120a and communicatively coupled with a second wireless device such as a table computer 120b, the SIM card 125 enables the second wireless device 120b to operate on the network 105, and enables the second wireless device 120b to be similarly configured as the first wireless device 120a.

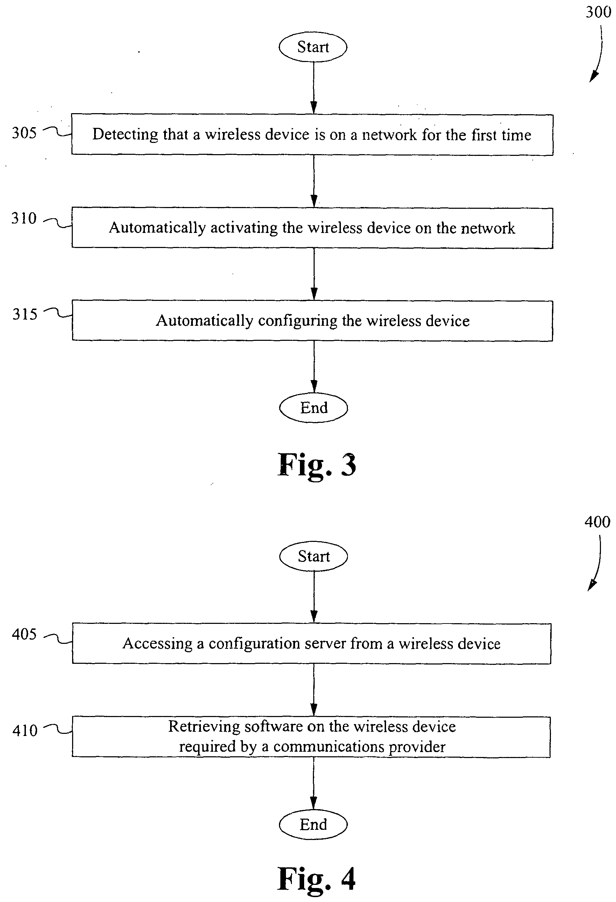

Figure 3 illustrates an exemplary method 300 of setting up a wireless device on a network in accordance with the present invention. The method 300 begins at a step 305, where the wireless device is detected on the network for a first time. For example, the subscriber has recently obtained the wireless device for use on the network, and a removable module is installed in a locus of the wireless device. In some embodiments, the removable module is a SIM card of the present invention. As discussed elsewhere, the SIM card of the present invention includes activation and configuration logic and, based on the logic, is configured to access an activation service to automatically activate the wireless device and to access a configuration service to retrieve configuration information. At a step 310, the wireless device is automatically activated on the network using the activation logic on the SIM card. At a step 315, the wireless device is automatically configured using the configuration logic on the SIM card. Exemplary configuration methods are discussed in Figures 4-6. After the step 315, the method 300 ends.

Figure 4 illustrates an exemplary method 400 of configuring a wireless device in accordance with the present invention. The method 400 begins at a step 405, where a configuration server is accessed from the wireless device. In some embodiments, the logic in the SIM card includes the network address of the configuration server and/or other identifying information about the configuration server. In some embodiments, the configuration server is the same server that provides the activation service. Typically, the configuration server provides the configuration service and is accessed by the wireless device after the wireless device is activated. The configuration server is typically provided by the wireless device with identifying information of the wireless device, for example, make and model. At a step 410, software required by the telecommunications provider is thereafter retrieved on the wireless device. This software is based on the identifying information provided by the wireless device and is necessary for the wireless device to work properly on the network. After it downloads, the software is configured to execute or install on the wireless device. After the step 410, the method 400 ends. Typically, the wireless device is thereafter configured for proper use on the network.

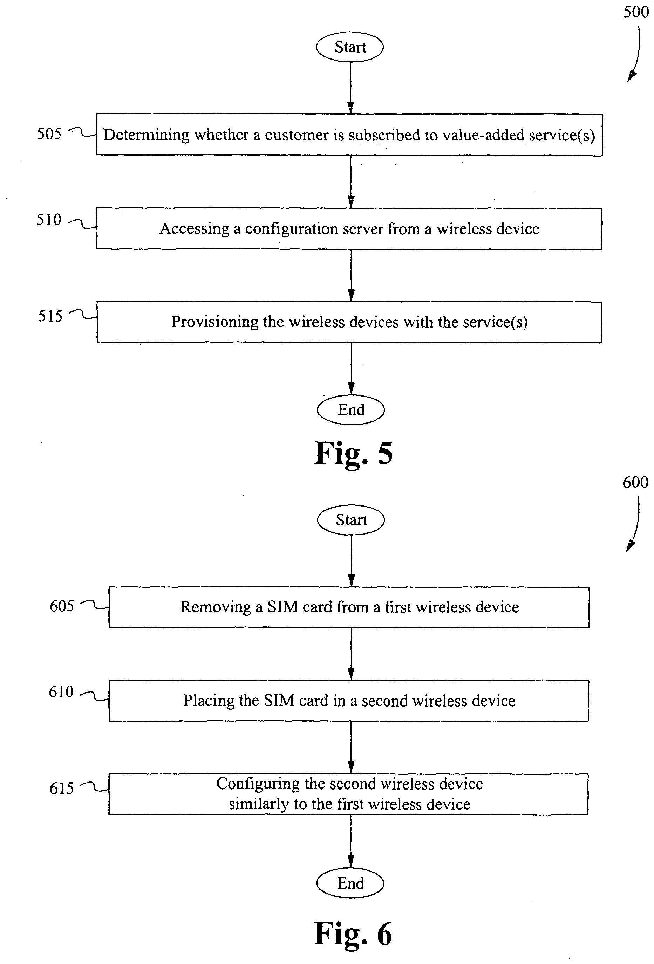

In some situations, a wireless device can be further configured after the software required by the telecommunications provider is retrieved and installed on the wireless device. Figure 5 illustrates another exemplary method 500 of configuring a wireless device in accordance with the present invention. The method 500 begins at a step 505, where it is determined whether the consumer of the wireless device is subscribed to one or more value-added services. In some embodiments, the consumer is prompted on the wireless device whether the consumer is a customer of a backup service, such as the MightyBackup™ service provided by Synchronoss Technologies, Inc. of Bridgewater, NJ. Based on the determination, at a step 510, the configuration server is accessed from the wireless device. In some embodiments, the consumer must provide the customer's account information for retrieving the one or more value-added services. After retrieving the one or more value-added services on the wireless device, at a step 515, the wireless device is provisioned with the one or more value-added services. In some embodiments, software associated with the one or more value-added services is downloaded and installed on the wireless device. Alternatively or in addition to, backed up personal data are updated onto the wireless device. Personal data include, but are not limited to, calendar, SMS messages, photo album, notes, ringtones, email and other data suitable for backup. After the step 515, the method 500 ends. In some embodiments, the wireless device thereafter is similarly configured as another wireless device previously used by the consumer.

The present invention advantageously allows the consumer to use the same SIM card with a different wireless device that is recently purchased or otherwise obtained for use on the network, with minimal or no user intervention during device activation and configuration of the different wireless device. Figure 6 illustrates an exemplary method 600 of configuring a secondary device in accordance with the present invention. The method 600 begins at a step 605, where a SIM card is removed from a first wireless device. Upon removing the SIM card, the first wireless device is no longer able to operate on the network. At a step 610, the SIM card is placed in a second wireless device. In some embodiments, the second wireless device self-activates when the SIM card is placed in the second wireless device; the wireless device is automatically activated on the network using the activation logic on the SIM card. At a step 615, the second wireless device is similarly configured as the first wireless device. The second wireless device is at least network configured. The second wireless device is also configured with any one or more value-added services and/or updated with any backed up personal data via, for example, the MightyBackup™ service. After the step 615, the method 600 ends.

Embodiments of the present invention are directed to an apparatus to self-activate and self-configure a device on such networks and a system and a method thereof. A SIM card of the present invention includes activation and configuration logic which advantageously enables a wireless device to self-activate and self-configure to operate on a network with minimal or no user intervention. The logic includes data for automatic navigation to an activation service and to a configuration service. The activation service activates the wireless device. The configuration service ensures that the wireless device is properly configured to work on a communications network and that the wireless device is backed up with personal data and provisioned with services that a consumer had previously subscribed to.

While the invention has been described with reference to numerous specific details, one of ordinary skill in the art will recognize that the invention can be embodied in other specific forms. Thus, one of ordinary skill in the art will understand that the invention is not to be limited by the foregoing illustrative details, but rather is to be defined by the appended claims.

## Claims

1. A removable module comprising an integrated circuit, wherein the removable module is communicatively coupled with a wireless device (200),
a wherein the integrated circuit is configured to store identification information about a subscriber, data for automatic navigation to a first predetermined network location hosting an activation service (110) and to a second predetermined network location hosting a configuration service (115);
b wherein the removable module is configured to automatically activate the wireless device for use on a network (105) by accessing the activation service (110); and
c wherein the removable module is configured to retrieve configuration information from the configuration service (115) onto the wireless device (200) to configure the wireless device (200) for use on the network (105), wherein the retrieved configuration information includes software that is required by a telecommunications provider to be installed on the wireless device (200), wherein configuring the wireless device comprises:
determining whether a consumer of the wireless device (200) is subscribed to one or more value-added services;
accessing a configuration server from the wireless device; and
provisioning the wireless device with the one or more value-added services, wherein provisioning the wireless device includes downloading and installing software associated with the one or more value-added services, wherein provisioning the wireless device includes retrieving backed up personal data.

2. The removable module of claim 1, wherein the configuration information includes data to personalize the wireless device (200).

3. A method of setting up a wireless device comprising a locus for receiving a removable module, on a network for use, wherein the removable module includes an integrated circuit, wherein the removable module is communicatively coupled with the wireless device (200), the method comprising:
a on the integrated circuit, storing data for automatic navigation to a first predetermined network location hosting an activation service and to a second predetermined network location hosting a configuration service
b detecting (305) at the removable module that the wireless device is on the network for a first time;
c upon the detection, without user input, said removable module automatically accessing the activation service to activate (310) the wireless device for use on the network; and
after activating, without user input, said removable module automatically accessing the configuration service to retrieve configuration information to configure (315) the wireless device for use on the network, wherein the configuration information includes software required by a telecommunications provider to be installed on the wireless device, wherein configuring the wireless device comprises:
determining whether a consumer of the wireless device (200) is subscribed to one or more value-added services;
accessing a configuration server from the wireless device;
provisioning the wireless device with the one or more value-added services, wherein provisioning the wireless device includes downloading and installing software associated with the one or more value-added services, and
wherein provisioning the wireless device includes retrieving backed up personal data.

4. The method of claim 3, further comprising, before detecting (305) that the wireless device is on the network for a first time, receiving the removable module within the locus of the wireless device.

5. The method of claim 3, wherein the removable module is a SIM card (125).

6. The method of claim 3, wherein automatically configuring the wireless device comprises:
a accessing a configuration server from the wireless device (200); and
b retrieving software on the wireless device required by the telecommunications provider.

7. The method of claim 3, further comprising:
a removing a SIM card (125) from a first wireless device;
b placing the SIM card in a second wireless device; and
c automatically configuring the second wireless (120b) device similarly as the first wireless device (120a).

8. A system (100) comprising:
a a network (105);
b an activation service (110) for activating wireless devices (120) for use on the network (105);
c a configuration service (115) for personalizing the wireless devices (120);
d a first wireless device; and
e a SIM card (125) comprising an integrated circuit storing data for automatic navigation to a first predetermined network location hosting the activation service and to a second predetermined network location hosting the configuration service, wherein the SIM card, when communicatively coupled with the first wireless device, is configured to:
i. enable the first wireless device to automatically navigate to the first predetermined network location hosting the activation service (110) to activate the first wireless device for use on the network (105);
ii. after the activation, enable the first wireless device to automatically navigate to the second predetermined network location hosting the configuration service (115); and
enable the first wireless device to retrieve configuration information from the configuration service, wherein the configuration information includes software required by a telecommunications provider to be installed on the first wireless device, wherein the configuration of the wireless device comprises:
determining whether a consumer of the wireless device (200) is subscribed to one or more value-added services;
accessing the configuration server from the wireless device; and
provisioning the wireless device with the one or more value-added services, wherein provisioning the wireless device includes downloading and installing software associated with the one or more value-added services, wherein provisioning the wireless device includes retrieving backed up personal data.

9. The system of claim 8, further comprising a second wireless device (120b).

10. The system of claim 8, wherein the SIM card (125), when communicatively coupled the second wireless device, is configured to enable the second wireless device (120b) to operate on the network (105), and to enable the second wireless device to be similarly configured as the first wireless device.

11. The system of claim 8, where in the SIM card (125) includes activation logic and configuration logic, wherein the activation logic is associated with an action of navigating to the first predetermined network location hosting the activation service, and wherein the configuration logic is associated with an action of navigating to the second predetermined network location hosting the configuration service (115).

## Patentansprüche

1. Entfernbares Modul, das eine integrierte Schaltung umfasst, wobei das entfernbare Modul mit einer drahtlosen Vorrichtung (200) kommunikativ gekoppelt ist,
a wobei die integrierte Schaltung konfiguriert ist, Identifikationsinformationen über einen Teilnehmer und Daten für die automatische Navigation zu einer ersten vorbestimmten Netzwerkadresse, die einen Aktivierungsdienst (110) hostet, und zu einer zweiten vorbestimmten Netzwerkadresse, die einen Konfigurationsdienst (115) hostet, zu speichern;
b wobei das entfernbare Modul konfiguriert ist, die drahtlose Vorrichtung zum Gebrauch an einem Netzwerk (105) durch Zugreifen auf den Aktivierungsdienst (110) automatisch zu aktivieren; und
c wobei das entfernbare Modul konfiguriert ist, Konfigurationsinformationen von dem Konfigurationsdienst (115) auf die drahtlose Vorrichtung (200) abzurufen, um die drahtlose Vorrichtung (200) zum Gebrauch an dem Netzwerk (105) zu konfigurieren, wobei die abgerufenen Konfigurationsinformationen Software umfassen, die durch einen Telekommunikationsanbieter erforderlich ist, und die auf der drahtlosen Vorrichtung (200) installiert wird, wobei das Konfigurieren der drahtlosen Vorrichtung umfasst:
Bestimmen, ob ein Verbraucher der drahtlosen Vorrichtung (200) bei einem oder mehreren Mehrwertdiensten angemeldet ist;
Zugreifen auf einen Konfigurationsserver von der drahtlosen Vorrichtung; und
Versorgen der drahtlosen Vorrichtung mit dem einen oder den mehreren Mehrwertdiensten,
wobei das Versorgen der drahtlosen Vorrichtung das Herunterladen und Installieren von Software umfasst, die mit dem einen oder den mehreren Mehrwertdiensten verknüpft ist, wobei das Versorgen der drahtlosen Vorrichtung das Abrufen von gesicherten personenbezogenen Daten umfasst.

2. Entfernbares Modul nach Anspruch 1, wobei die Konfigurationsinformationen Daten umfassen, um die drahtlose Vorrichtung (200) zu personalisieren.

3. Verfahren zum Einstellen einer drahtlosen Vorrichtung, die einen Ort zum Aufnehmen eines entfernbaren Moduls umfasst, an einem Netzwerk zum Gebrauch, wobei das entfernbare Modul eine integrierte Schaltung umfasst, wobei das entfernbare Modul mit der drahtlosen Vorrichtung (200) kommunikativ gekoppelt ist, wobei das Verfahren umfasst:
a bei der integrierten Schaltung, das Speichern von Daten für die automatische Navigation zu einer ersten vorbestimmten Netzwerkadresse, die einen Aktivierungsdienst hostet, und zu einer zweiten vorbestimmten Netzwerkadresse, die einen Konfigurationsdienst hostet;
b Detektieren (305), an dem entfernbaren Modul, dass sich die drahtlose Vorrichtung zum ersten Mal an dem Netzwerk befindet;
c nach der Detektion, ohne Benutzereingabe, automatisches Zugreifen des entfernbaren Moduls auf den Aktivierungsdienst, um die drahtlose Vorrichtung zum Gebrauch an dem Netzwerk zu aktivieren (310); und
nach dem Aktivieren, ohne Benutzereingabe, automatisches Zugreifen des entfernbaren Moduls auf den Konfigurationsdienst, um Konfigurationsinformationen abzurufen und die drahtlose Vorrichtung zum Gebrauch an dem Netzwerk zu konfigurieren (315), wobei die Konfigurationsinformationen Software umfassen, die durch einen Telekommunikationsanbieter erforderlich ist, und die auf der drahtlosen Vorrichtung installiert wird, wobei das Konfigurieren der drahtlosen Vorrichtung umfasst:
Bestimmen, ob ein Verbraucher der drahtlosen Vorrichtung (200) bei einem oder mehreren Mehrwertdiensten angemeldet ist;
Zugreifen auf einen Konfigurationsserver von der drahtlosen Vorrichtung;
Versorgen der drahtlosen Vorrichtung mit dem einen oder den mehreren Mehrwertdiensten, wobei das Versorgen der drahtlosen Vorrichtung das Herunterladen und Installieren von Software umfasst, die mit dem einen oder den mehreren Mehrwertdiensten verknüpft ist, und
wobei das Versorgen der drahtlosen Vorrichtung das Abrufen von gesicherten personenbezogenen Daten umfasst.

4. Verfahren nach Anspruch 3, ferner umfassend, vor dem Detektieren (305), dass sich die drahtlose Vorrichtung zum ersten Mal an dem Netzwerk befindet, das Aufnehmen des entfernbaren Moduls innerhalb des Ortes der drahtlosen Vorrichtung.

5. Verfahren nach Anspruch 3, wobei das entfernbare Modul eine SIM-Karte (125) ist.

6. Verfahren nach Anspruch 3, wobei das automatische Konfigurieren der drahtlosen Vorrichtung umfasst:
a Zugreifen auf einen Konfigurationsserver von der drahtlosen Vorrichtung (200); und
b Abrufen von Software auf der drahtlosen Vorrichtung, die durch den Telekommunikationsanbieter erforderlich ist.

7. Verfahren nach Anspruch 3, ferner umfassend:
a Entfernen einer SIM-Karte (125) von einer ersten drahtlosen Vorrichtung;
b Platzieren der SIM-Karte in einer zweiten drahtlosen Vorrichtung; und
c automatisches Konfigurieren der zweiten drahtlosen Vorrichtung (120b) in ähnlicher Weise wie die erste drahtlose Vorrichtung (120a).

8. System (100), umfassend:
a ein Netzwerk (105);
b einen Aktivierungsdienst (110) zum Aktivieren von drahtlosen Vorrichtungen (120) zum Gebrauch an dem Netzwerk (105);
c einen Konfigurationsdienst (115) zum Personalisieren der drahtlosen Vorrichtungen (120);
d eine erste drahtlose Vorrichtung; und
e eine SIM-Karte (125), die eine integrierten Schaltung umfasst, welche Daten für die automatische Navigation zu einer ersten vorbestimmten Netzwerkadresse, die den Aktivierungsdienst hostet, und zu einer zweiten vorbestimmten Netzwerkadresse, die den Konfigurationsdienst hostet, speichert, wobei die SIM-Karte, wenn sie mit der ersten drahtlosen Vorrichtung kommunikativ gekoppelt ist, konfiguriert ist zum:
i. in die Lage Versetzen der ersten drahtlosen Vorrichtung, automatisch zur ersten vorbestimmten Netzwerkadresse zu navigieren, die den Aktivierungsdienst (110) hostet, um die erste drahtlose Vorrichtung zum Gebrauch an dem Netzwerk (105) zu aktivieren;
ii. nach der Aktivierung, in die Lage Versetzen der ersten drahtlosen Vorrichtung, automatisch zur zweiten vorbestimmten Netzwerkadresse zu navigieren, die den Konfigurationsdienst (115) hostet; und
in die Lage Versetzen der ersten drahtlosen Vorrichtung, Konfigurationsinformationen von dem Konfigurationsdienst abzurufen, wobei die Konfigurationsinformationen Software umfassen, die durch einen Telekommunikationsanbieter erforderlich ist, und die auf der ersten drahtlosen Vorrichtung installiert wird, wobei die Konfiguration der drahtlosen Vorrichtung umfasst:
Bestimmen, ob ein Verbraucher der drahtlosen Vorrichtung (200) bei einem oder mehreren Mehrwertdiensten angemeldet ist;
Zugreifen auf den Konfigurationsserver von der drahtlosen Vorrichtung; und
Versorgen der drahtlosen Vorrichtung mit dem einen oder den mehreren Mehrwertdiensten,
wobei das Versorgen der drahtlosen Vorrichtung das Herunterladen und Installieren von Software umfasst, die mit dem einen oder den mehreren Mehrwertdiensten verknüpft ist, wobei das Versorgen der drahtlosen Vorrichtung das Abrufen gesicherter personenbezogener Daten umfasst.

9. System nach Anspruch 8, ferner umfassend eine zweite drahtlose Vorrichtung (120b).

10. System nach Anspruch 8, wobei die SIM-Karte (125) konfiguriert ist, wenn sie mit der zweiten drahtlosen Vorrichtung kommunikativ gekoppelt ist, die zweite drahtlose Vorrichtung (120b) in die Lage zu versetzen, an dem Netzwerk (105) zu arbeiten, und die zweite drahtlose Vorrichtung in die Lage zu versetzen, in ähnlicher Weise wie die erste drahtlose Vorrichtung konfiguriert zu sein.

11. System nach Anspruch 8, wobei in der SIM-Karte (125) Aktivierungslogik und Konfigurationslogik beinhaltet ist, wobei die Aktivierungslogik mit einer Aktion des Navigierens zu der ersten vorbestimmten Netzwerkadresse verknüpft ist, die den Aktivierungsdienst hostet, und wobei die Konfigurationslogik mit einer Aktion des Navigierens zu der zweiten vorbestimmten Netzwerkadresse verknüpft ist, die den Konfigurationsdienst (115) hostet.

## Revendications

1. Module amovible comprenant un circuit intégré, dans lequel le module amovible est couplé en communication avec un dispositif sans fil (200),
a) dans lequel le circuit intégré est configuré de manière à stocker des informations d'identification concernant un abonné, des données pour une navigation automatique vers un premier emplacement de réseau prédéterminé hébergeant un service d'activation (110) et vers un second emplacement de réseau prédéterminé hébergeant un service de configuration (115) ;
b) dans lequel le module amovible est configuré de manière à activer automatiquement le dispositif sans fil en vue d'une utilisation sur un réseau (105) en accédant au service d'activation (110) ; et
c) dans lequel le module amovible est configuré de manière à récupérer des informations de configuration à partir du service de configuration (115) sur le dispositif sans fil (200) pour configurer le dispositif sans fil (200) en vue d'une utilisation sur le réseau (105), dans lequel les informations de configuration récupérées incluent un logiciel qui est requis par un fournisseur de télécommunications et installé sur le dispositif sans fil (200), dans lequel l'étape de configuration du dispositif sans fil comprend les étapes ci-dessous consistant à :
déterminer si un consommateur du dispositif sans fil (200) est abonné à un ou plusieurs services à valeur ajoutée ;
accéder à un serveur de configuration à partir du dispositif sans fil ; et
mettre en service le dispositif sans fil avec ledit un ou lesdits plusieurs services à valeur ajoutée ; dans lequel l'étape de mise en service du dispositif sans fil inclut l'étape consistant à télécharger et installer un logiciel associé audit un ou auxdits plusieurs services à valeur ajoutée, dans lequel l'étape de mise en service du dispositif sans fil inclut l'étape consistant à récupérer des données personnelles sauvegardées.

2. Module amovible selon la revendication 1, dans lequel les informations de configuration incluent des données pour personnaliser le dispositif sans fil (200).

3. Procédé de configuration d'un dispositif sans fil comprenant un locus destiné à recevoir un module amovible, sur un réseau à utiliser, dans lequel le module amovible inclut un circuit intégré, dans lequel le module amovible est couplé en communication avec le dispositif sans fil (200), le procédé comprenant les étapes ci-dessous consistant à ou dans lesquelles :
a) sur le circuit intégré, stocker des données pour une navigation automatique vers un premier emplacement de réseau prédéterminé hébergeant un service d'activation et vers un second emplacement de réseau prédéterminé hébergeant un service de configuration ;
b) détecter (305), au niveau du module amovible, que le dispositif sans fil est sur le réseau pour la première fois ;
c) suite à la détection, sans saisie d'utilisateur, ledit module amovible accède automatiquement au service d'activation pour activer (310) le dispositif sans fil en vue d'une utilisation sur le réseau ; et
suite à l'activation, sans saisie d'utilisateur, ledit module amovible accède automatiquement au service de configuration pour récupérer des informations de configuration afin de configurer (315) le dispositif sans fil en vue d'une utilisation sur le réseau, dans lequel les informations de configuration incluent un logiciel requis par un fournisseur de télécommunications et installé sur le dispositif sans fil, dans lequel l'étape de configuration du dispositif sans fil comprend les étapes ci-dessous consistant à :
déterminer si un consommateur du dispositif sans fil (200) est abonné à un ou plusieurs services à valeur ajoutée ;
accéder à un serveur de configuration à partir du dispositif sans fil ;
mettre en service le dispositif sans fil avec ledit un ou lesdits plusieurs services à valeur ajoutée, dans lequel l'étape de mise en service du dispositif sans fil inclut l'étape consistant à télécharger et installer un logiciel associé audit un ou auxdits plusieurs services à valeur ajoutée ; et
dans lequel l'étape de mise en service du dispositif sans fil inclut l'étape consistant à récupérer des données personnelles sauvegardées.

4. Procédé selon la revendication 3, comprenant en outre l'étape consistant à, avant de détecter (305) que le dispositif sans fil est sur le réseau pour la première fois, recevoir le module amovible au sein du locus du dispositif sans fil.

5. Procédé selon la revendication 3, dans lequel le module amovible est une carte SIM (125).

6. Procédé selon la revendication 3, dans lequel l'étape de configuration automatique du dispositif sans fil comprend les étapes ci-dessous consistant à :
a) accéder à un serveur de configuration à partir du dispositif sans fil (200) ; et
b) récupérer un logiciel sur le dispositif sans fil, requis par le fournisseur de télécommunications.

7. Procédé selon la revendication 3, comprenant en outre les étapes ci-dessous consistant à :
a) retirer une carte SIM (125) d'un premier dispositif sans fil ;
b) placer la carte SIM dans un second dispositif sans fil ; et
c) configurer automatiquement le second dispositif sans fil (120b) de la même manière que le premier dispositif sans fil (120a).

8. Système (100) comprenant :
a) un réseau (105) ;
b) un service d'activation (110) pour activer des dispositifs sans fil (120) en vue d'une utilisation sur le réseau (105) ;
c) un service de configuration (115) pour personnaliser les dispositifs sans fil (120) ;
d) un premier dispositif sans fil ; et
e) une carte SIM (125) comprenant un circuit intégré stockant des données pour une navigation automatique vers un premier emplacement de réseau prédéterminé hébergeant le service d'activation, et vers un second emplacement de réseau prédéterminé hébergeant le service de configuration, dans lequel la carte SIM, lorsqu'elle est couplée en communication avec le premier dispositif sans fil, est configurée de manière à :
i. permettre au premier dispositif sans fil de naviguer automatiquement vers le premier emplacement de réseau prédéterminé hébergeant le service d'activation (110) pour activer le premier dispositif sans fil en vue d'une utilisation sur le réseau (105) ;
ii. suite à l'activation, permettre au premier dispositif sans fil de naviguer automatiquement vers le second emplacement de réseau prédéterminé hébergeant le service de configuration (115) ; et
permettre au premier dispositif sans fil de récupérer des informations de configuration à partir du service de configuration, dans lequel les informations de configuration incluent un logiciel requis par un fournisseur de télécommunications et installé sur le premier dispositif sans fil, dans lequel l'étape de configuration du dispositif sans fil comprend les étapes ci-dessous consistant à :
déterminer si un consommateur du dispositif sans fil (200) est abonné à un ou plusieurs services à valeur ajoutée ;
accéder au serveur de configuration à partir du dispositif sans fil ; et
mettre en service le dispositif sans fil avec ledit un ou lesdits plusieurs services à valeur ajoutée ;
dans lequel l'étape de mise en service du dispositif sans fil inclut l'étape consistant à télécharger et installer un logiciel associé audit un ou auxdits plusieurs services à valeur ajoutée, dans lequel l'étape de mise en service du dispositif sans fil inclut l'étape consistant à récupérer des données personnelles sauvegardées.

9. Système selon la revendication 8, comprenant en outre un second dispositif sans fil (120b).

10. Système selon la revendication 8, dans lequel la carte SIM (125), lorsqu'elle est couplée en communication au second dispositif sans fil, est configurée de manière à permettre au second dispositif sans fil (120b) de fonctionner sur le réseau (105), et à permettre au second dispositif sans fil d'être configuré de la même manière que le premier dispositif sans fil.

11. Système selon la revendication 8, dans lequel la carte SIM (125) inclut une logique d'activation et une logique de configuration, dans lequel la logique d'activation est associée à une action de navigation vers le premier emplacement de réseau prédéterminé hébergeant le service d'activation, et dans lequel la logique de configuration est associée à une action de navigation vers le second emplacement de réseau prédéterminé hébergeant le service de configuration (115).
